# EUROPÄISCHE PATENTSCHRIFT

(11) **EP 3 236 709 B1**
(45) Veröffentlichungstag und Bekanntmachung des Hinweises auf die Patenterteilung: **08.07.2020**
(21) Anmeldenummer: 17164626.8
(22) Anmeldetag: 03.04.2017
(51) Int. Cl.: H05B 6/06, F24C 7/08, H05B 3/68, H05B 1/02

(54) **VERFAHREN ZUR STEUERUNG EINES KOCHGERÄTES UND KOCHGERÄT**
METHOD FOR CONTROLLING A COOKING DEVICE AND COOKING DEVICE
PROCÉDÉ DE COMMANDE D'UN APPAREIL DE CUISSON ET APPAREIL DE CUISSON

(30) Priorität: 22.04.2016 DE 102016206912
(43) Veröffentlichungstag der Anmeldung: 25.10.2017
(73) Patentinhaber: E.G.O. Elektro-Gerätebau GmbH, 75038 Oberderdingen (DE)
(72) Erfinder: Alvarez Raventos, Jordi, 75038 Oberderdingen (DE); Bayer, Ewald, 72358 Dormettingen (DE); Knappe, Gerd, 75015 Bretten (DE); Kümmerle, Hannes, 75038 Oberderdingen (DE); Metzner, Pierre, 75038 Oberderdingen (DE); Schmidt, Kay, 75038 Oberderdingen-Flehingen (DE); Weiß, Steffen, 75059 Zaisenhausen (DE); Zabel, Oliver, 76227 Karlsruhe (DE)
(74) Vertreter: Patentanwälte Ruff, Wilhelm, Beier, Dauster & Partner mbB

(56) Entgegenhaltungen:
- DE-A1-102013 006 082
- DE-A1-102014 215 778
- US-A1- 2002 094 778

## Beschreibung

### Anwendungsgebiet und Stand der Technik

Die Erfindung betrifft ein Verfahren zur Steuerung eines Kochgerätes mit einem von dem Kochgerät separaten mobilen Endgerät, vorzugsweise einem Mobiltelefon oder einem Tablet-Computer.

Aus der DE 19802558 A1 ist es bekannt, ein Kochfeld als Kochgerät mit einer Fernbedienung zu steuern. Die Fernbedienung kann beispielsweise mittels einer IR-Übertragungsstrecke arbeiten.

Aus der DE 102014215778 A1 sind ein Kochfeld und ein Verfahren zu dessen Betreiben bekannt, wobei eine externe Bedieneinheit, vorteilhaft in Form eines Mobiltelefons bzw. Smartphones, genutzt werden kann, um das Kochfeld zu bedienen. Durch eine Bewegung der Bedieneinheit relativ zum Kochfeld kann eine Betriebsbedingung des Kochfelds eingestellt werden. Dazu kann sie in einer Ebene parallel zum Kochfeld bewegt werden. Die Kommunikation erfolgt drahtlos.

Aus der DE 102013006082 A1 ist eine Bedieneinrichtung für ein Kochgerät bekannt, die eine Stellvorrichtung nach Art einer Funk-Fernbedienung aufweist. Ein Knebel ist mit einem eigenen Transceiver versehen, und auch das Kochgerät weist einen eigenen Transceiver auf. Bei einer zu geringen Signalstärke, insbesondere aufgrund zu großer Entfernung zwischen Stellvorrichtung und Kochgerät, erfolgt eine Notfallabschaltung.

Aus der US 2002/0094778 A1 ist für eine Bluetooth-Kommunikationsverbindung beschrieben, wie eine Signalstärke (RSSI) überwacht und angezeigt werden kann. Damit kann die Signalstärke überwacht und verwendet werden, um die Funkverbindung hinsichtlich ihrer Qualität und Sicherheit einzustufen.

### Aufgabe und Lösung

Der Erfindung liegt die Aufgabe zugrunde, ein eingangs genanntes Verfahren zur Steuerung eines Kochgeräts sowie ein zur Durchführung dieses Verfahrens ausgebildetes Kochgerät zu schaffen, mit denen Probleme des Stands der Technik gelöst werden können und es insbesondere möglich ist, Kochvorgänge an dem Kochgerät komfortabel und sicher durchführen zu können.

Gelöst wird diese Aufgabe durch ein Verfahren mit den Merkmalen des Anspruchs 1 sowie ein zur Durchführung dieses Verfahrens ausgebildetes Kochgerät mit den Merkmalen des Anspruchs 11. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Kochgerät beschrieben. Sie sollen jedoch unabhängig davon sowohl für das Verfahren als auch für das Kochgerät unabhängig voneinander selbständig gelten können. Der Wortlaut der Ansprüche wird durch ausdrückliche Bezugnahme zum Inhalt der Beschreibung gemacht.

Das Verfahren ermöglicht es, ein Kochgerät, insbesondere ein Kochfeld, mit einem von dem Kochgerät separaten mobilen Endgerät zu steuern. Das Kochgerät weist mindestens eine Heizeinrichtung oder eine sonstige Funktionseinheit auf. Ebenso weist es mindestens ein Bedienelement zur Eingabe von Bedienbefehlen durch eine Bedienperson auf, vorteilhaft eine Bedienvorrichtung mit mehreren solchen Bedienelementen. Diese können mechanisch betätigbar sein oder aber auch sogenannte Berührsensoren oder Touch-Sensoren sein. Des Weiteren weist das Kochgerät eine Steuerung, eine Kommunikationseinrichtung zur drahtlosen Kommunikation mit dem mobilen Endgerät und gegebenenfalls eine Anzeige auf, die optisch und/oder akustisch arbeiten kann.

Das mobile Endgerät weist eine eigene Kommunikationseinrichtung, eine Steuerung und eine Eingabeeinrichtung zur Eingabe von Bedienbefehlen durch eine Bedienperson auf. Die Eingabeeinrichtung am mobilen Endgerät arbeitet vorteilhaft mit Berührsensoren bzw. Touch-Sensoren wie diese bekannt sind. Dies ist an sich aber üblich für mobile Endgeräte wie beispielsweise Mobiltelefone oder Tablet-Computer.

Das Verfahren weist die folgenden Schritte auf. Zuerst werden das Kochgerät und das mobile Endgerät eingeschaltet bzw. sie sollten eingeschaltet sein. Unter Umständen muss auf dem mobilen Endgerät ein entsprechendes Programm bzw. eine sogenannte App gestartet werden. Dann wird durch einen spezifizierten Bedienvorgang an dem Kochgerät und/oder an dem mobilen Endgerät, der zur Herstellung der Kommunikationsverbindung zwischen den beiden Geräten dient, diese Kommunikationsverbindung hergestellt. Vorteilhaft erfolgt der spezifizierte Bedienvorgang am mobilen Endgerät, er kann beispielsweise durch das vorbeschriebene Starten des Programms bzw. der App automatisch ausgelöst werden. Dann wird das Herstellen einer Kommunikationsverbindung durch einen Bedienvorgang der Bedienperson am Kochgerät bestätigt. Dies erfolgt vorteilhaft durch Betätigen eines vorgenannten Bedienelements des Kochgeräts. Dadurch wird gewährleistet, dass die Bedienperson sich über dieses Herstellen der Kommunikationsverbindung bewusst ist und sie gezielt hergestellt wird. Vorteilhaft erfolgt dieses Bestätigen innerhalb einer vorgegebenen Bestätigungszeit, andernfalls wird die Kommunikationsverbindung wieder abgebrochen bzw. nicht hergestellt. Dies wird nachfolgend noch näher erläutert.

Eine Signalstärke der Kommunikationsverbindung zwischen den Kommunikationseinrichtungen von Kochgerät und mobilem Endgerät zum Zeitpunkt des Bestätigens der Kommunikationsverbindung am Kochgerät wird abgespeichert, vorteilhaft in der Steuerung des Kochgeräts. Dann wird während des Bestehens der Kommunikationsverbindung bzw. während des Steuerns des Kochgeräts durch das mobile Endgerät die aktuelle Signalstärke der Kommunikationsverbindung am Kochgerät bzw. die Signalstärke von Bedienbefehlen, die per Funk vom mobilen Endgerät gesandt werden, überwacht. Auch dies kann an beiden Geräten erfolgen, vorteilhaft aber zumindest am Kochgerät. Dann kann mittels des mobilen Endgeräts durch Eingabe von Bedienbefehlen daran durch die Bedienperson das Kochgerät bedient werden, beispielsweise kann eine Heizeinrichtung bzw. eine sonstige Funktionseinheit in ihrer Leistung oder sonstigen Betriebsart verändert werden, angeschaltet oder auch ausgeschaltet werden. Dies kann sowohl am mobilen Endgerät als auch am Kochfeld selbst erfolgen.

Wird beim Überwachen der aktuellen Signalstärke der Kommunikationsverbindung ein Abfallen über ein bestimmtes Maß erkannt, wenn also die Signalstärke einen vorgegebenen Signalstärke-Grenzwert unterschreitet, was an der Kommunikationsverbindung selbst und/oder an einem empfangenen Bedienbefehl vom mobilen Endgerät an das Kochgerät festgestellt werden kann, so werden zumindest Bedienbefehle des mobilen Endgeräts am Kochgerät blockiert bzw. es wird unter Umständen sogar die Kommunikationsverbindung zwischen Kochgerät und Endgerät getrennt. Diese Sicherheitsfunktion bedeutet, dass erkannt werden kann und soll, wenn sich eine Bedienperson mit dem mobilen Endgerät zu weit vom Kochgerät entfernt. Dann besteht nämlich das Problem, dass ein Sichtkontakt zu dem Kochgerät wohl gar nicht mehr oder nicht mehr uneingeschränkt gegeben ist und somit nicht mehr genau kontrolliert werden kann, wie das Kochgerät gerade arbeitet. Aus Sicherheitsgründen werden Bedienbefehle des mobilen Endgeräts an das Kochgerät blockiert bzw. es wird dann evtl. sogar ein Trennen der Kommunikationsverbindung vorgenommen. Dabei kann in einer Ausgestaltung der Erfindung vorgesehen sein, dass das Kochfeld in dem zuletzt sicher betriebenen Zustand weiterarbeitet, es muss also nicht hinsichtlich einer Leistung einer Heizeinrichtung reduziert oder ganz abgeschaltet werden. Es kann eben nur nicht mehr mit dem Endgerät gesteuert werden. Am Kochgerät selbst ist eine normale Steuerung aber weiterhin ohne Einschränkungen möglich. Dazu muss die Bedienperson ja wieder nahe an dem Kochgerät stehen.

In Ausgestaltung der Erfindung kann vorgesehen sein, dass für den spezifizierten Bedienvorgang zum Herstellen der Kommunikationsverbindung zwischen Kochgerät und mobilem Endgerät ein einziger Bedienbefehl bzw. das Betätigen eines einzigen Bedienelements ausreicht. Wie zuvor erläutert, könnte hier schon das Starten eines Programms bzw. einer App auf dem mobilen Endgerät als entsprechender Bedienbefehl ausreichen, spätestens aber wenn davon ein spezieller Bedienbefehl am Endgerät eingefordert wird, der grafisch entsprechend angezeigt werden kann, und dieser dann eingegeben wird.

In alternativer Ausgestaltung der Erfindung kann vorgesehen sein, dass für den spezifizierten Bedienvorgang zum Herstellen der Kommunikationsverbindung zwischen Kochgerät und mobilem Endgerät das Betätigen eines Bedienelements am Kochgerät und das Betätigen eines Bedienelements am mobilen Endgerät notwendig ist. So ist der Aufwand zwar etwas erhöht, die Bediensicherheit aber gleichzeitig deutlich erhöht.

In vorteilhafter Ausgestaltung der Erfindung kann das Bestätigen des Herstellens der Kommunikationsverbindung und/oder das Trennen der Kommunikationsverbindung optisch und/oder akustisch angezeigt werden. So wird eine Bedienperson auch sicher darüber informiert, dass die Kommunikationsverbindung und somit die Möglichkeit hergestellt worden ist, das Kochgerät mittels des mobilen Endgeräts zu steuern. Eine solche Anzeige kann mindestens am mobilen Endgerät erfolgen, vorteilhaft auch am Kochgerät. Eine akustische Anzeige sollte kurz sein, beispielsweise als einfacher oder mehrfacher Signalton. Eine optische Anzeige dagegen kann auch dauerhaft bestehen, beispielsweise indem eine entsprechende Leuchtanzeige am Endgerät und/oder am Kochfeld die hergestellte und bestehende Kommunikationsverbindung anzeigt.

Auf dem mobilen Endgerät kann in weiterer Ausgestaltung der Erfindung ein Status des Kochgeräts angezeigt werden, insbesondere auch der mit dem mobilen Endgerät gesteuerten oder steuerbaren Heizeinrichtung bzw. Funktionseinheit. Dies kann auch erfolgen, wenn sich die Signalstärke der Kommunikationsverbindung mehr als zulässig geändert hat. Somit kann eine Bedienperson an dem mobilen Endgerät sämtliche Informationen sehen, die auch an dem Kochfeld angezeigt werden würden und die vor allem für eine sichere und komfortable Steuerung des Kochgeräts durch das Endgerät von Vorteil sind. Hierfür wird aber auf den eingangs genannten und auch auf den sonstigen bekannten Stand der Technik verwiesen, der zahlreiche Möglichkeiten hierfür beschreibt. So können auf dem mobilen Endgerät auch automatische Kochprogramme ablaufen und Bedienbefehle an das Kochgerät senden, entweder semiautomatisch mit Vorschlag durch das Programm und jeweiliger Bestätigung durch die Bedienperson oder aber auch automatisch. Somit kann eine Bedienperson leicht bestimmte Kochprogramme durchführen, wobei die einzelnen Daten bzw. Parameter von dem Endgerät vorgegeben werden. Als Vorteil gegenüber einer normalen manuellen Bedienung am Kochgerät nach Ablesen am Endgerät kann ein am Endgerät vorgeschlagener Bedienbefehl einfach durch die Bedienperson bestätigt werden. So kann beispielsweise das Endgerät eine Kochstufe "7" für ein Kochfeld vorschlagen im Ablauf eines Kochprogramms, was dann von der Bedienperson einfach nur noch bestätigt werden muss. Dies ist erkennbar einfacher als die Kochstufe "7" am Kochfeld selbst einstellen zu müssen.

In Ausgestaltung der Erfindung kann vorgesehen sein, dass nach dem Trennen der Kommunikationsverbindung aufgrund zu geringer bzw. zu stark abgesunkener Signalstärke, wenn also der eingangs genannte Signalstärke-Grenzwert unterschritten worden ist, die Kommunikationsverbindung nicht wieder automatisch hergestellt wird, selbst wenn die Signalstärke dann wieder ansteigen sollte durch erneute Annäherung. Die Kommunikationsverbindung ist nur durch ein spezielles Bedienverfahren wiederherstellbar, vorteilhaft entspricht dieses spezielle Bedienverfahren dem Verfahren zum ersten Herstellen oder zum Bestätigen der Kommunikationsverbindung, wie dies eingangs erläutert worden ist. Somit wird sichergestellt, dass auch nach einem bewussten Steuern des Kochgeräts durch das mobile Endgerät und einem Trennen der Kommunikationsverbindung deren Wiederherstellen bewusst und gezielt durch eine Bedienperson durchgeführt wird, um Bedienfehler oder Gefahrensituationen zu vermeiden.

Es kann vorgesehen sein, dass eine Signaländerung bzw. Signalverringerung von mehr als maximal 7 oder 8 dBm, vorzugsweise maximal 5 dBm, die Bedienbefehle vom Endgerät blockiert oder sogar die Kommunikationsverbindung trennt. Erfindungsgemäß beträgt der vorgenannte Signalstärke-Grenzwert maximal 50% der Signalstärke zum Zeitpunkt des Bestätigens der Kommunikationsverbindung am Kochgerät. Vorteilhaft beträgt der Signalstärke-Grenzwert maximal 20% der genannten Signalstärke zum Zeitpunkt des Bestätigens der Kommunikationsverbindung. Sinkt die Signalstärke also auf unter 20% der Signalstärke beim Bestätigen der Kommunikationsverbindung, so erfolgt ein Einschreiten der Steuerung.

In vorteilhafter Ausgestaltung der Erfindung kann die vorgegebene Bestätigungszeit zum Bestätigen des Herstellens einer Kommunikationsverbindung maximal 10 sec betragen, vorteilhaft beträgt sie maximal 3 sec. Dies bedeutet, dass eine Bedienperson nicht allzu lange warten kann, bis sie das Herstellen der Kommunikationsverbindung nach Anfrage vom mobilen Endgerät am Kochgerät bestätigen muss.

In weiterer Ausgestaltung der Erfindung kann vorgesehen sein, dass nach Betätigen eines Bedienelements, mit dem auch das Herstellen einer Kommunikationsverbindung bestätigt werden kann, für eine Zeit länger als die vorgenannte vorgegebene Bestätigungszeit, das Kochgerät von sich aus ein mobiles Endgerät sucht, welches für eine Kommunikationsverbindung mit dem Kochgerät bereit ist. Eine solche Zeit kann beispielsweise 5 sec länger dauern als die vorgenannte vorgegebene Bestätigungszeit. Darüber hinaus ist es möglich, dass bei Betätigen dieses Bedienelements für eine nochmals längere Zeit, beispielsweise mehr als 10 sec oder mehr als 20 sec, die Kommunikationsverbindung mit einem mobilen Endgerät vom Kochgerät aus getrennt wird.

Vorteilhaft kann eine Kommunikationsverbindung nach dem Bluetooth-Standard arbeiten, insbesondere nach dem BLE-Standard. Hierbei werden geringere Signalstärken verwendet, welche in manchen Fällen aus Sicherheitsgründen vorgezogen werden könnten. Des Weiteren kann bei solchen geringeren Signalstärken ein Abfallen der Signalstärke, wie es benötigt wird, um das vorbeschriebene Trennen der Kommunikationsverbindung durchführen zu können, stärker erfolgen und somit besser erkennbar sein. Schließlich soll eine Kommunikationsverbindung beispielsweise bei mehr als 10 m Abstand und freier Sicht zwischen Kochgerät und mobilem Endgerät aus Sicherheitsgründen auf alle Fälle getrennt werden. Alternativ kann eine andere bzw. ähnliche Funkverbindung genutzt werden, beispielsweise nach dem Zigbee-Standard.

In Ausgestaltung der Erfindung ist es möglich, dass in dem Fall, dass die Kommunikationsverbindung hergestellt wird durch Durchführen eines Bedienbefehls für das Kochgerät auf dem mobilen Endgerät und anschließender Bestätigung des Herstellens der Kommunikationsverbindung am Kochgerät, auch gleich dieser auslösende Bedienbefehl am Kochgerät durchgeführt wird. Somit kann ein schnellerer Bedienvorgang erfolgen, und durch die vorbeschriebene Abfolge der genannten Schritte innerhalb einiger weniger Sekunden, was zwingend ist, ist auch sichergestellt, dass der Bedienbefehl von der Bedienperson tatsächlich gewollt ist und auch sozusagen kontrolliert ist. So kann darauf verzichtet werden, nach dem Bestätigen des Herstellens der Kommunikationsverbindung am Kochgerät noch einmal direkt am mobilen Endgerät einen Bedienbefehl eingeben zu müssen.

Vorteilhaft ist das Kochgerät eben ein vorgenanntes Kochfeld, weist also mehrere Heizeinrichtungen auf, beispielsweise vier Heizeinrichtungen für vier Kochzonen. Bedient werden können dann mittels des mobilen Endgeräts diese vier Kochzonen. Gegebenenfalls können auch weitere Einstellungen vorgenommen werden wie die Programmierung eines Timers oder auch von sogenannten Boost-Leistungsstufen für die Heizeinrichtungen, bei denen für eine kurze vorgegebene Zeit eine übergroße Leistung erzeugt wird, die aber nicht als Dauerleistung eingestellt bleiben kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelnen Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine schematische Darstellung einer Bedienung eines Kochfeldes mit einem Mobiltelefon als Endgerät und
- Fig. 2: eine Darstellung eines Zustandsautomaten um den Ablauf des Verfahrens und die Funktion der Steuerung darzustellen.

### Detaillierte Beschreibung des Ausführungsbeispiels

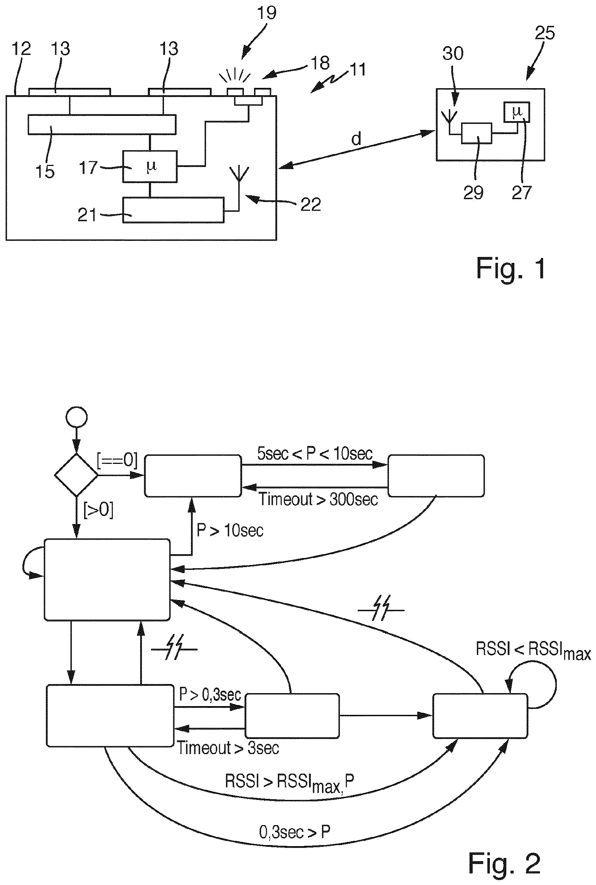

In der Fig. 1 ist ein erfindungsgemäßes Kochfeld 11 als Kochgerät sehr stark schematisch dargestellt. Es weist an einer Oberseite bzw. einer Kochfeldplatte 12 mehrere Heizeinrichtungen 13 auf, welche von einer Leistungsansteuerung 15 im Kochfeld angesteuert bzw. mit Leistung versorgt werden und somit betrieben werden können. Die Leistungsansteuerung 15 ist mit einer Steuerung 17 des Kochfelds 11 verbunden. Die Steuerung 17 kann eine Zentralsteuerung des gesamten Kochfelds 11 sein und beispielsweise ein Bedienelement 18 einer Bedieneinrichtung sowie eine optische Anzeige 19 oben am Kochfeld 11 ansteuern. Selbstverständlich können, wie bei modernen Kochgeräten bzw. Kochfeldern üblich, auch noch erheblich mehr Bedienelemente und optische Anzeigen moderner Bauart vorgesehen sein.

Die Steuerung 17 ist mit einer Kommunikationseinrichtung 21 samt Antenne 22 verbunden, welche nach dem Bluetooth-Standard arbeitet, vorteilhaft sogar nach dem BLE-Standard, also mit niedriger Energie. Dies dient dem vorgenannten Zweck, dass eine Art Abstandsbestimmung bzw. Bestimmung eines bestimmten Mindestabstandes bzw. Grenzabstandes im Bereich von wenigen Metern, beispielsweise bei 5 m bis 10 m, durch Überwachung der Signalstärke besser möglich ist. Alternativ könnte sie nach dem Zigbee-Standard oder einem sonstigen ähnlichen Funkprotokoll arbeiten.

Des Weiteren zeigt die Fig. 1 ein Mobiltelefon 25 als erfindungsgemäßes mobiles Endgerät. Das Mobiltelefon 25 ist als Smartphone ausgebildet und enthält neben einer üblichen Steuerung 27 eine Kommunikationseinrichtung 29 samt Antenne 30, welche auch nach dem Bluetooth-Standard bzw. vorteilhaft dem BLE-Standard ausgebildet ist.

In der hier zu sehenden Darstellung befindet sich das Mobiltelefon 25 innerhalb einer Entfernung d vom Kochfeld 11 bzw. genau genommen weisen die Antennen 22 und 30 diesen Abstand zueinander auf. Aufgrund der bekannten begrenzten Geräteabmessungen von Kochfeld 11 und Mobiltelefon 25 spielt dies aber keine Rolle.

Der Zustandsautomat gemäß Fig. 2 zeigt quasi schematisch den Ablauf des erfindungsgemäßen Verfahrens bzw. dieses kann sich daran nachvollziehen lassen. Zu Beginn sind Kochfeld 11 und Mobiltelefon 25 eingeschaltet und sollen sich, beispielsweise aufgrund einer Bedienung am Mobiltelefon 25, verbinden zur Steuerung. Wird noch kein verbindungsbereites Gerät von dem Kochfeld 11 gefunden, so zeigt der nach rechts weisende Pfeil, dass dort auf eine Verbindung gewartet wird. Dann kann das Bedienelement 18 am Kochfeld 11 betätigt werden als "P", beispielsweise für eine Zeit zwischen 5 sec und 10 sec, so dass das Kochfeld in einen Modus zum Verbindungsaufbau geht und versucht eine Verbindung mit einem mobilen Endgerät herzustellen. Ist dies innerhalb einer Zeit von beispielsweise 5 min nicht möglich, so geht die Steuerung nach dem timeout wieder zurück und wartet sozusagen darauf, dass das Bedienelement 18 erneut betätigt wird für eine ggf. neue Suche. Gelingt die Verbindung mit dem Mobiltelefon 25 als Kästchen rechts daneben, so startet das Herstellen der Kommunikationsverbindung und geht zu dem großen Kästchen links oben. Das Herstellen der Kommunikationsverbindung wird solange versucht, bis eines der folgenden Ereignisse auftritt. Das Bedienelement 18 wird noch einmal für eine Zeit beispielsweise länger als 10 sec gedrückt als "P", dann wird die Verbindung zum Mobiltelefon 25 wieder getrennt, wie durch den gebogenen nach oben gehenden Pfeil gezeigt wird. Durch ggf. Bestätigen am Mobiltelefon 25 wird die Kommunikationsverbindung bestätigt und besteht dann als Kästchen links unten. Wird dann das Bedienelement 18 beispielsweise für mehr als 0,3 sec betätigt so geht es zu dem Kästchen rechts daneben, also unten in der Mitte. Dann ist die Kommunikationsverbindung hergestellt und das Kochfeld 11 kann am Mobiltelefon 25 bedient werden, was das Kästchen rechts unten zeigt. Es können beispielsweise Kochstellen des Kochfelds ein- und ausgeschaltet werden sowie deren Leistungen eingestellt und verändert werden. Solange eine Signalstärke RSSI an der Kommunikationseinrichtung 21 am Kochfeld 11 unterhalb des genannten Signalstärke-Grenzwerts RSSIₘₐₓ liegt ist die Kommunikationsverbindung aktiv und das Kochfeld 11 kann am mobilen Endgerät bedient werden. Das Kochfeld 11 kann entweder in allen oder zumindest in vielen Funktionen vom Mobiltelefon 25 aus bestätigt werden, insbesondere auch in Leistungseinstellung, Einschalten und Ausschalten von Heizeinrichtungen 13. Bei anderen Funkprotokollen wäre es ein anders benannter Signalstärke-Grenzwert.

Wird die Kommunikationsverbindung vom Mobiltelefon 25 allerdings nicht bestätigt wird, so geht das Verfahren wieder zurück zum Kästchen links unten. Die beiden Geräte sind dann zwar miteinander verbunden, aber nicht so, dass die Kommunikationsverbindung funktional ist für eine gewünschte Bedienbarkeit.

Wie zuvor beschrieben worden ist, könnte die Kommunikationsverbindung auch in diesem Zustand durch Betätigen des Bedienelements für eine lange Zeitdauer, beispielsweise mehr als 10 sec, wieder getrennt werden bzw., was hier dargestellt ist, werden Bedienbefehle vom Mobiltelefon 25 blockiert bei an sich bestehender Verbindung. Durch Betätigen des Bedienelements für mehr als 10sec können auch alle bekannten bzw. verbundenen externen Geräte entkoppelt bzw. getrennt werden. Das Kochfeld 11 geht dann in einen Zustand, in dem keine externe Bedienung mehr möglich ist und auch keine Statusinformationen mehr gesendet werden. Erst durch erneutes Anstoßen des Koppelvorgangs bzw. Verbindungsvorgangs wird die Kommunikationseinrichtung 21 wieder aktiviert.

Zum Zeitpunkt des Bestätigens der Kommunikationsverbindung wird die Signalstärke RSSI am Kochfeld 11 bzw. an der Kommunikationseinrichtung 21 gemessen. Des Weiteren ist ein vorgenannter Signalstärke-Grenzwert RSSIₘₐₓ definiert, beispielsweise wie vorgenannt als maximal 50% oder sogar maximal 20% der Signalstärke zum Zeitpunkt des Bestätigens der Kommunikationsverbindung. Alternativ kann eine Signaländerung von mehr als vorzugsweise 5 dBm oder 7 dBm die Befehle blockieren bzw. die Kommunikationsverbindung trennen. Diese Signalstärke wird permanent gemessen. Solange sich die Signalstärke nicht deutlich ändert, beispielsweise weil sich die Bedienperson mit dem Mobiltelefon 25 nahe am Kochfeld 11 befindet oder sich zumindest das Mobiltelefon 25 nahe am Kochfeld 11 befindet, die Entfernung d also klein ist, bleibt die Kommunikationsverbindung aufrechterhalten, und das Kochfeld 11 kann mit dem Mobiltelefon 25 gesteuert werden. Bewegt sich eine Bedienperson bei stationär neben dem Kochfeld 11 liegenden Mobiltelefon 25 weit weg, beispielsweise auch aus einem Raum heraus, so führt dies nicht zum Trennen der Kommunikationsverbindung oder zum Blockieren der Befehle. Zwar kann die Bedienperson den Zustand des Kochfelds 11 nicht überwachen, gleichzeitig kann sie an ihr aber auch keine Bedienbefehle eingeben bzw. dessen Funktionszustand nicht ändern.

Unterschreitet die Signalstärke den vorgenannten Signalstärke-Grenzwert bzw. ändert sie sich zu stark, so wird die Kommunikationsverbindung getrennt bzw. es ist zumindest nicht mehr möglich, dass das Kochfeld mit dem Mobiltelefon 25 gesteuert wird. Bedienbefehle des Mobiltelefons 25 an das Kochfeld 11 werden von der Steuerung 17 dann einfach blockiert. Das Aufrechterhalten der Kommunikationsverbindung bei gleichzeitigem Blockieren von Bedienbefehlen weist den Vorteil auf, dass dann leicht die Kommunikationsverbindung wiederhergestellt werden kann bzw. Bedienbefehle nicht mehr blockiert werden. Dazu muss dann lediglich das Bedienelement 18 wieder betätigt werden als "P", beispielsweise wiederum für eine Zeit kleiner als 5 sec. Dadurch signalisiert die Bedienperson, dass sie nun wieder nahe am Kochfeld 11 ist und wieder die Kontrolle hat. Es ist aber möglich, dass immer noch Statusinformationen wie eine eingestellte Leistung oder laufende Timer des Kochfelds 11 am Mobiltelefon 25 weiterhin angezeigt werden können, auch wenn die externe Steuerung durch das Mobiltelefon nicht mehr möglich ist.

Bei einem solchen Blockieren von Bedienbefehlen wegen Unterschreiten des Signalstärkegrenzwerts RSSIₘₐₓ geht das Verfahren von dem Kästchen ganz unten rechts bis zu dem Kästchen ganz unten links zurück. Durch das beschriebene erneute Betätigen des Bedienelements 25 als "P" für eine Zeit kürzer als 3 sec, was beispielsweise auch als weitere Sicherheitsfunktion innerhalb von 5 min, 10 min oder 20 min erforderlich sein kann, geht das Verfahren wieder zum Kästchen ganz unten rechts und somit zur vorherigen Steuerbarkeit des Kochfelds 11 durch das Mobiltelefon 25.

## Patentansprüche

1. Verfahren zur Steuerung eines Kochgeräts (11) mit einem von dem Kochgerät separaten mobilen Endgerät (25),
wobei das Kochgerät aufweist:
- mindestens eine Heizeinrichtung (13),
- mindestens ein Bedienelement (18) zur Eingabe von Bedienbefehlen durch eine Bedienperson,
- eine Steuerung (17),
- eine Kommunikationseinrichtung (21) zur drahtlosen Kommunikation mit dem mobilen Endgerät (25),
wobei das mobile Endgerät (25) aufweist:
- eine eigene Kommunikationseinrichtung (29),
- eine Steuerung (27),
- eine Eingabeeinrichtung zur Eingabe von Bedienbefehlen durch eine Bedienperson,
wobei das Verfahren die folgenden Schritte aufweist:
- Einschalten von Kochgerät (11),
- Herstellen einer Kommunikationsverbindung zwischen Kochgerät (11) und eingeschaltetem mobilen Endgerät (25) durch einen spezifizierten Bedienvorgang an dem Kochgerät und/oder an dem mobilen Endgerät,
- Bestätigen des Herstellens einer Kommunikationsverbindung durch einen Bedienvorgang der Bedienperson am Kochgerät (11),
- Speichern einer Signalstärke (RSSI) der Kommunikationsverbindung zwischen den Kommunikationseinrichtungen (21, 29) von Kochgerät (11) und mobilem Endgerät (25) zum Zeitpunkt des Bestätigens der Kommunikationsverbindung am Kochgerät,
- Überwachen der aktuellen Signalstärke (RSSI) der Kommunikationsverbindung am Kochgerät (11) und/oder der Signalstärke von per Funk vom mobilen Endgerät (25) gesandten Bedienbefehlen während des Bestehens der Kommunikationsverbindung,
- Bedienen des Kochgeräts (11) mittels des mobilen Endgeräts (25) durch Eingabe von Bedienbefehlen am mobilen Endgerät durch die Bedienperson,
- Blockieren von Bedienbefehlen des mobilen Endgeräts (25) und/oder Trennen der Kommunikationsverbindung zwischen Kochgerät (11) und mobilem Endgerät in dem Fall, dass die Signalstärke der Kommunikationsverbindung und/oder eines empfangenen Bedienbefehls vom mobilen Endgerät an das Kochgerät einen vorgegebenen Signalstärke-Grenzwert (RSSIₘₐₓ) unterschreitet,
**dadurch gekennzeichnet, dass** der Signalstärke-Grenzwert (RSSIₘₐₓ) maximal 50% der Signalstärke (RSSI) zum Zeitpunkt des Bestätigens der Kommunikationsverbindung am Kochgerät (11) beträgt.

2. Verfahren nach Anspruch 1, **dadurch gekennzeichnet, dass** für den spezifizierten Bedienvorgang zum Herstellen der Kommunikationsverbindung zwischen Kochgerät (11) und mobilem Endgerät (25) ein einziger Bedienbefehl oder das Betätigen eines einzigen Bedienelements (18) ausreicht.

3. Verfahren nach Anspruch 1, **dadurch gekennzeichnet, dass** für den spezifizierten Bedienvorgang zum Herstellen der Kommunikationsverbindung zwischen Kochgerät (11) und mobilem Endgerät (25) das Betätigen je eines einzigen Bedienelements (18) am Kochgerät (11) und am mobilen Endgerät (25) ausreicht.

4. Verfahren nach einem der vorhergehenden Ansprüche, **dadurch gekennzeichnet, dass** das Bestätigen des Herstellens der Kommunikationsverbindung und/oder das Trennen der Kommunikationsverbindung optisch und/oder akustisch angezeigt werden, insbesondere mindestens am mobilen Endgerät (25) und vorzugsweise auch am Kochgerät (11).

5. Verfahren nach einem der vorhergehenden Ansprüche, **dadurch gekennzeichnet, dass** auf dem mobilen Endgerät (25) ein Status des Kochgeräts (11) angezeigt wird, insbesondere betreffend die mit dem mobilen Endgerät steuerbare Heizeinrichtung (13) oder Funktionseinheit.

6. Verfahren nach einem der vorhergehenden Ansprüche, **dadurch gekennzeichnet, dass** nach dem Trennen der Kommunikationsverbindung aufgrund zu stark abgesunkener Signalstärke (RSSI) die Kommunikationsverbindung nur wiederherstellbar ist durch ein Verfahren entsprechend dem ersten Herstellen der Kommunikationsverbindung.

7. Verfahren nach einem der vorhergehenden Ansprüche, **dadurch gekennzeichnet, dass** eine Signaländerung von mehr als max. 7 dBm als vorgegebene Signalstärke-Grenzwert (RSSIₘₐₓ) die Kommunikationsverbindung trennt.

8. Verfahren nach einem der vorhergehenden Ansprüche, **dadurch gekennzeichnet, dass** vorgegebene Bestätigungszeit zum Bestätigen des Herstellens einer Kommunikationsverbindung maximal 10 sec beträgt, vorzugsweise maximal 3 sec.

9. Verfahren nach einem der vorhergehenden Ansprüche, **dadurch gekennzeichnet, dass** die Kommunikationsverbindung nach dem Bluetooth-Standard ausgebildet ist, insbesondere nach dem BLE-Standard.

10. Verfahren nach einem der vorhergehenden Ansprüche, **dadurch gekennzeichnet, dass** die Kommunikationsverbindung hergestellt wird durch Durchführen eines Bedienbefehls für das Kochgerät (11) auf dem mobilen Endgerät (25), wobei anschließend an die zwingend nachfolgende Bestätigung des Herstellens der Kommunikationsverbindung am Kochgerät (11) auch gleich der auslösende Bedienbefehl am Kochgerät durchgeführt wird.

11. Kochgerät (11) **gekennzeichnet durch** eine Kommunikationseinrichtung (21) und eine Steuerung (17), die zur Durchführung des Verfahrens nach einem der vorhergehenden Ansprüche ausgebildet sind.

## Claims

1. Method for controlling a cooking appliance (11) using a mobile terminal (25) that is separate from the cooking appliance,
wherein the cooking appliance has:
- at least one heating device (13),
- at least one user element (18) for the input of user commands by a user,
- a controller (17),
- a communication device (21) for wireless communication with the mobile terminal (25),
wherein the mobile terminal (25) has:
- a communication device (29) of its own,
- a controller (27),
- an input device for the input of user commands by a user,
wherein the method has the following steps:
- switching on the cooking appliance (11),
- setting up a communication link between cooking appliance (11) and turned-on mobile terminal (25) by means of a specified user process on the cooking appliance and/or on the mobile terminal,
- confirming the set-up of a communication link by means of a user process by the user on the cooking appliance (11),
- storing a signal strength (RSSI) of the communication link between the communication devices (21, 29) of the cooking appliance (11) and the mobile terminal (25) at the time of confirmation of the communication link on the cooking appliance,
- monitoring the current signal strength (RSSI) of the communication link on the cooking appliance (11) and/or of the signal strength of user commands sent by the mobile terminal (25) by radio while the communication link exists,
- operating the cooking appliance (11) by means of the mobile terminal (25) by virtue of input of user commands on the mobile terminal by the user,
- blocking user commands of the mobile terminal (25) and/or disconnecting the communication link between the cooking appliance (11) and the mobile terminal in the event of the signal strength of the communication link and/or of a received user command from the mobile terminal to the cooking appliance dropping below a prescribed signal strength limit value (RSSIₘₐₓ),
**characterized in that** the signal strength limit value (RSSIₘₐₓ) is no more than 50% of the signal strength (RSSI) at the time of the confirmation of the communication link on the cooking appliance (11).

2. Method according to claim 1, **characterized in that** a single user command or the operation of a single user element (18) is sufficient for the specified user process for setting up the communication link between the cooking appliance (11) and the mobile terminal (25).

3. Method according to claim 1, **characterized in that** the operation of a single user element (18) on both the cooking appliance (11) and the mobile terminal (25) is sufficient for the specified user process for setting up the communication link between the cooking appliance (11) and the mobile terminal (25).

4. Method according to any of the preceding claims, **characterized in that** the confirmation of the set-up of the communication link and/or the disconnection of the communication link are indicated visually and/or audibly, particularly at least on the mobile terminal (25) and preferably also on the cooking appliance (11).

5. Method according to any of the preceding claims, **characterized in that** a status of the cooking appliance (11) is indicated on the mobile terminal (25), particularly relating to the heating device (13) or functional unit controllable using the mobile terminal.

6. Method according to any of the preceding claims, **characterized in that** after the communication link has been disconnected on account of excessively fallen signal strength (RSSI), the communication link is restorable only by means of a method corresponding to the first set-up of the communication link.

7. Method according to any of the preceding claims, **characterized in that** a signal change of more than 7 dBm max. as a prescribed signal strength limit value (RSSIₘₐₓ) disconnects the communication link.

8. Method according to any of the preceding claims, **characterized in that** the prescribed confirmation time for confirming the set-up of a communication link is no more than 10 sec, preferably no more than 3 sec.

9. Method according to any of the preceding claims, **characterized in that** the communication link is designed according to the Bluetooth standard, particularly according to the BLE standard.

10. Method according to any of the preceding claims, **characterized in that** the communication link is set up as a result of performance of a user command for the cooking appliance (11) on the mobile terminal (25), wherein subsequent to the inevitably following confirmation of the set-up of the communication link on the cooking appliance (11), the initiating user command is also performed immediately on the cooking appliance.

11. Cooking appliance (11), **characterized by** a communication device (21) and a controller (17) that are designed for performing the method according to any of the preceding claims.

## Revendications

1. Procédé de commande d'un appareil de cuisson (11), comprenant un terminal mobile (25) séparé de l'appareil de cuisson,
l'appareil de cuisson comprenant :
- au moins un dispositif chauffant (13),
- au moins un élément de réglage (18) pour entrer des instructions de réglage par un opérateur,
- un contrôleur (17),
- un dispositif de communication (21) pour une communication sans fil avec le terminal mobile (25),
le terminal mobile (25) comprenant :
- son propre dispositif de communication (29),
- un contrôleur (27),
- un dispositif d'entrée pour entrer des instructions de réglage par un opérateur,
le procédé comprenant les étapes suivantes consistant à :
- mettre en marche l'appareil de cuisson (11),
- établir une liaison de communication entre l'appareil de cuisson (11) et le terminal mobile (25) en marche par une opération de réglage spécifiée au niveau de l'appareil de cuisson et/ou du terminal mobile,
- confirmer l'établissement d'une liaison de communication par une opération de réglage de l'opérateur au niveau de l'appareil de cuisson (11),
- mémoriser une intensité de signal (RSSI) de la liaison de communication entre les dispositifs de communication (21, 29) de l'appareil de cuisson (11) et le terminal mobile (25) au moment de la confirmation de la liaison de communication au niveau de l'appareil de cuisson,
- surveiller l'intensité de signal actuelle (RSSI) de la liaison de communication au niveau de l'appareil de cuisson (11) et/ou l'intensité de signal d'instructions de réglage envoyées par radio depuis le terminal mobile (25) pendant l'existence de la liaison de communication,
- régler l'appareil de cuisson (11) au moyen du terminal mobile (25) par l'entrée d'instructions de réglage au niveau du terminal mobile par l'opérateur,
- bloquer des instructions de réglage du terminal mobile (25) et/ou déconnecter la liaison de communication entre l'appareil de cuisson (11) et le terminal mobile au cas où l'intensité de signal de la liaison de communication et/ou d'une instruction de réglage reçue du terminal mobile à l'appareil de cuisson soupasse une valeur limite d'intensité de signal prédéfinie (RSSIₘₐₓ),
**caractérisé en ce que** la valeur limite d'intensité de signal (RSSIₘₐₓ) est au maximum égale à 50 % de l'intensité de signal (RSSI) au moment de la confirmation de la liaison de communication au niveau de l'appareil de cuisson (11).

2. Procédé selon la revendication 1, **caractérisé en ce qu'**une seule instruction de réglage ou le réglage d'un seul élément de réglage (18) suffit pour l'opération de réglage spécifiée afin d'établir la liaison de communication entre l'appareil de cuisson (11) et le terminal mobile (25).

3. Procédé selon la revendication 1, **caractérisé en ce que** le réglage d'un seul élément de réglage (18) respectivement au niveau de l'appareil de cuisson (11) et du terminal mobile (25) suffit pour l'opération de réglage spécifiée afin d'établir la liaison de communication entre l'appareil de cuisson (11) et le terminal mobile (25).

4. Procédé selon l'une quelconque des revendications précédentes, **caractérisé en ce que** la confirmation de l'établissement de la liaison de communication et/ou la déconnexion de la liaison de communication sont indiqués de manière optique et/ou acoustique, en particulier au moins au niveau du terminal mobile (25) et de préférence également au niveau de l'appareil de cuisson (11).

5. Procédé selon l'une quelconque des revendications précédentes, **caractérisé en ce qu'**un statut de l'appareil de cuisson (11) est affiché sur le terminal mobile (25), en particulier concernant le dispositif chauffant (13) ou l'unité fonctionnelle pouvant être commandé(e) par le terminal mobile.

6. Procédé selon l'une quelconque des revendications précédentes, **caractérisé en ce qu'**après la déconnexion de la liaison de communication en raison d'une trop forte baisse de l'intensité de signal (RSSI), la liaison de communication peut seulement être rétablie par un procédé correspondant au premier établissement de la liaison de communication.

7. Procédé selon l'une quelconque des revendications précédentes, **caractérisé en ce qu'**une variation de signal de plus de 7 dBm maximum comme une valeur limite d'intensité de signal prédéfinie (RSSIₘₐₓ) déconnecte la liaison de communication.

8. Procédé selon l'une quelconque des revendications précédentes, **caractérisé en ce que** le délai de confirmation prédéfini pour confirmer l'établissement d'une liaison de communication est de 10 s maximum, de préférence de 3 s maximum.

9. Procédé selon l'une quelconque des revendications précédentes, **caractérisé en ce que** la liaison de communication est réalisée selon la norme Bluetooth, en particulier selon la norme BLE.

10. Procédé selon l'une quelconque des revendications précédentes, **caractérisé en ce que** la liaison de communication est établie par l'exécution d'une instruction de réglage pour l'appareil de cuisson (11) sur le terminal mobile (25), dans lequel, suite à la confirmation de l'établissement de la liaison de communication qui suit obligatoirement au niveau de l'appareil de cuisson (11), l'instruction de réglage de déclenchement est également effectuée immédiatement au niveau de l'appareil de cuisson.

11. Appareil de cuisson (11), **caractérisé par** un dispositif de communication (21) et un contrôleur (17) qui sont réalisés pour effectuer le procédé selon l'une quelconque des revendications précédentes.
